# EUROPÄISCHE PATENTSCHRIFT

(11) **EP 2 868 984 B1**
(45) Veröffentlichungstag und Bekanntmachung des Hinweises auf die Patenterteilung: **14.12.2016**
(21) Anmeldenummer: 14189821.3
(22) Anmeldetag: 22.10.2014
(51) Int. Cl.: F24D 3/08, F24D 3/18, F24D 17/02

(54) **Hybridheizungsanlage**
Hybrid heating system
Installation de chauffage hybride

(30) Priorität: 29.10.2013 FR 1360552
(43) Veröffentlichungstag der Anmeldung: 06.05.2015
(73) Patentinhaber: ROBERT BOSCH GMBH, 70442 Stuttgart (DE)
(72) Erfinder: Trela, Marc, 94410 Saint-Maurice (FR)

(56) Entgegenhaltungen:
- EP-A2- 2 273 203
- WO-A2-2009/119695

## Beschreibung

### Gebiet der Erfindung

Die vorliegende Erfindung bezieht sich auf eine Hybridheizungsanlage, die aus einer Luft/Flüssigkeit-Wärmepumpe und aus einem Kessel, der die Erwärmung und die Zubereitung von heißem Sanitärwasser ermöglicht, aufgebaut ist und einen Kreis für ein Wärmeübertragungsfluid, der durch den Verflüssiger der Wärmepumpe stromaufseitig des Kessels verläuft und sich in einen Heizkreis und in einen Kreis für die Zubereitung von heißem Sanitärwasser aufzweigt, die durch ein Dreiwegeventil mit dem Kreis stromaufseitig des Verflüssigers angeschlossen sind, umfasst, wobei der Kreis für die Zubereitung von heißem Sanitärwasser einen Wärmetauscher aufweist, durch den die Sanitärwasserleitung verläuft.

### Stand der Technik

Die Anlage umfasst einen Verflüssiger, der mit der Wärmepumpe verbunden ist.

Der Sanitärtauscher ist mit dem Verflüssiger durch einen Kreis verbunden, der ein Dreiwegeventil besitzt, das in der Weise einstellbar ist, dass ein Teil des Wärmeübertragungsfluids des Heizkreises zu dem Sanitärtauscher abgezweigt wird, um diesen unabhängig von dem Abgriff, der durch den Durchgang von kaltem Wasser erfolgt, um das heiße Sanitärwasser zu erzeugen, auf seiner Temperatur zu halten.

Wenn heißes Sanitärwasser abgezapft wird, d. h. wenn das kalte Wasser den Sanitärtauscher durchquert, um heißes Wasser zu ergeben, wird der Betrieb der Wärmepumpe unterbrochen, um ihren Verflüssiger nicht zu überhitzen, der mit dem Heizkreis keine Wärme austauschen kann, weil dieser Teil des Kreises unterbrochen ist, so dass der Kessel hauptsächlich die Erwärmung des heißen Sanitärwassers sicherstellt.

Das Dokument EP2273203 offenbart den Oberbegriff des Anspruchs 1.

### Aufgabe der Erfindung

Die vorliegende Erfindung hat die Aufgabe, eine Hybridheizungsanlage zu entwickeln, die einen wirksameren Betrieb der Wärmepumpe unter Vermeidung ihres Anhaltens während der Zubereitung von heißem Sanitärwasser ermöglicht.

### Darlegung und Vorteile der Erfindung

Hierzu hat die Erfindung eine Hybridheizungsanlage des oben definierten Typs zum Gegenstand, dadurch gekennzeichnet, dass die Leitung für eintretendes kaltes Sanitärwasser durch den Verflüssiger verläuft, bevor es den Wärmetauscher des Kreises für die Zubereitung von heißem Sanitärwasser durchläuft.

Somit ist es nicht nur nicht notwendig, die Wärmepumpe während der Zubereitung von heißem Sanitärwasser anzuhalten, sondern darüber hinaus liefert der Kreis der Wärmepumpe einen Teil der Wärme, die für die Zubereitung von heißem Sanitärwasser erforderlich ist. Die Wärmepumpe arbeitet nämlich fortgesetzt, ohne ihren Verflüssiger zu überhitzen, weil die Wärme durch das kalte Sanitärwasser abgegriffen wird, bevor dieses durch den Sanitärtauscher verläuft, der durch den Kreis für die Zubereitung von heißem Sanitärwasser, das sich durch den Tauscher bewegt, versorgt wird.

Die Erfindung ermöglich somit die nicht vernachlässigbare Zunahme des Wärmeeintrags durch die Wärmepumpe, weil die Zubereitung von heißem Sanitärwasser in den früheren Kreisen eine Stillstandszeit des Betriebs der Wärmepumpe in der Größenordnung von einer bis zu zwei Stunden täglich aufweisen kann.

Gemäß einem weiteren vorteilhaften Merkmal ist der Verflüssiger in zwei Teile unterteilt, einen stromaufseitigen Teil, durch den die Leitung für kaltes Sanitärwasser verläuft, und einen stromabseitigen Teil, durch den der Heizkreis verläuft.

Diese Ausführung des Verflüssigers in zwei Teilen ist vorteilhaft sowohl für die Fertigung als auch für die Anlage und ermöglicht die perfekte Steuerung des Betriebs der Wärmepumpe.

Besonders vorteilhaft ist der stromaufseitige Teil des Verflüssigers mit einer Ladung aus wärmeleitendem Material versehen, die einen Puffer für die Speicherung von Wärmeenergie bildet, wobei dieses Material insbesondere Kupfer ist.

Somit wird während der gesamten Betriebsdauer der Wärmepumpe der Teil des Verflüssigers, der der Zubereitung von heißem Sanitärwasser vorbehalten ist, stromaufseitig mit Wärme beschickt.

### Zeichnung

Die vorliegende Erfindung wird im Folgenden genauer mit Hilfe einer beispielhaften Hybridheizungsanlage erläutert, die in der einzigen beigefügten Figur dargestellt ist, die ein Blockschaltplan dieser Anlage ist.

### Beschreibung einer Ausführungsform der Erfindung

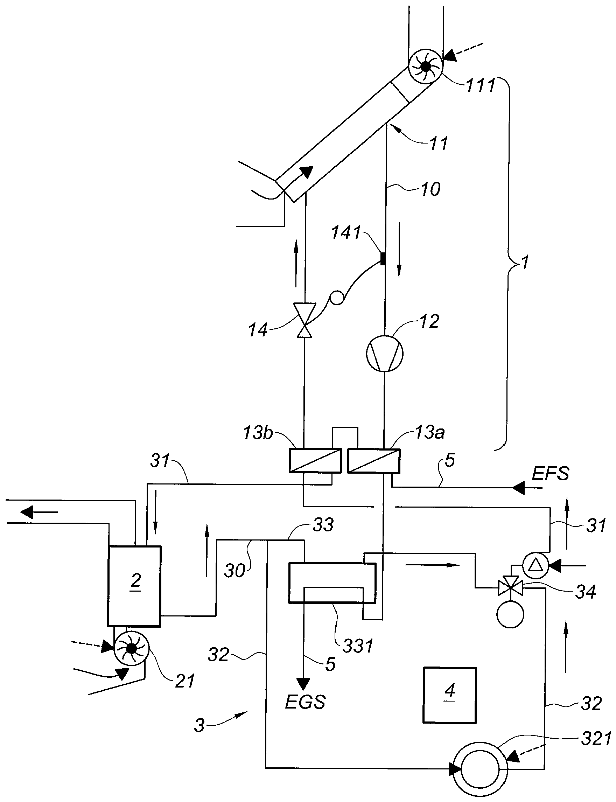

Gemäß der Figur hat die Erfindung eine Hybridheizungsanlage zum Gegenstand, die aus einer Luft/Flüssigkeit-Wärmepumpe 1 und einem Kessel 2 gebildet ist, um einen Wärmeübertragungskreis 3 mit einem Heizkreis 32 und einem Kreis 33 für die Zubereitung von heißem Sanitärwasser zu versorgen.

Ausgehend von dem Kessel 2 teilt sich der Vorlaufzweig 30 des Wärmeübertragungsfluidkreises 3 in einen Heizkreis 32 und einen Kreis 33 für die Zubereitung von heißem Sanitärwasser auf. Diese beiden Kreise 32, 33 sind am Ausgang durch ein einstellbares Dreiwegeventil 34 verbunden, das die beiden Wärmeübertragungsfluidwege zu einem einzigen Weg in dem Rücklaufkreis 31 vereinigt, der zunächst den Verflüssiger 13b der Wärmepumpe 1 durchquert, um wieder mit dem Eingang des Kessels 2 verbunden zu werden.

Das Dreiwegeventil 34, das die Durchsätze des Wärmeübertragungsfluids in dem Heizkreis 32 bzw. in dem Kreis 33 für die Zubereitung von heißem Sanitärwasser reguliert, wird entsprechend dem Wärmebedarf in jedem der Kreise gesteuert, wobei dem Kreis 32 für die Zubereitung von heißem Sanitärwasser Priorität verliehen wird. Dieses einstellbare Ventil 34 kann in der "Alles oder Nichts"-Betriebsart oder in einer kontinuierlich einstellbaren Betriebsart arbeiten, um die beiden Fluidwege in den zwei Kreisen 32, 33 veränderlich aufzuteilen.

Die Funktion der Heizungsanlage wird durch eine Steuerzentrale 4, die die Temperatur an verschiedenen Punkten des Wärmeübertragungskreises detektiert, sowie durch eine Turbine, die den Durchsatz von kaltem Sanitärwasser (EFS) misst, steuert, um den Betrieb des Dreiwegeventils 34, den Betrieb des Kessels 2 und jenen der Wärmepumpe 1 zu steuern.

Gemäß der Erfindung ist der Verflüssiger 13a,b aus zwei Teilen 13a, 13b gebildet, wovon der stromaufseitige Teil 13a dem Durchgang der Leitung 5 für kaltes Sanitärwasser stromaufseitig des Sanitärtauschers 331 vorbehalten ist und der andere, stromabseitige Teil 13b dem Heizkreis 31 vorbehalten ist.

Durch den stromaufseitigen Teil 13a des Verflüssigers erläuft die Kaltwasserleitung 5, um das eintretende kalte Sanitärwasser mit Priorität zu erwärmen. Dieser Verflüssigerteil 13a ist mit einer Puffermasse für die Speicherung von Wärme wie etwa einer Kupfermasse gefüllt.

Der Kreis 33 für die Zubereitung von heißem Sanitärwasser ist aus einem Tauscher 331 für heißes Sanitärwasser mit Gegenströmung gebildet, wobei der Kreis dann mit dem Dreiwegeventil 34 verbunden ist. Der Tauscher 331 wird von der Kaltwasserleitung 5 durchquert, um am Ausgang heißes Sanitärwasser ECS zu liefern.

Der Kessel 2 ist vorzugsweise ein Kondensationskessel. Er ist mit einem System für die Versorgung mit Verbrennungsluft durch einen Ventilator 21 ausgerüstet.

Die Wärmepumpe 1 ist aus einem Fluidkreis 10, der durch einen Verdampfer 11 verläuft, der mit durch einen Ventilator 111 angesaugter Luft versorgt wird, und aus einem Kompressor 12 stromabseitig des Verdampfers 11 und am Eingang des Verflüssigers 13a, b gebildet. Der Ausgang des stromabseitigen Teils 13b des Verflüssigers ist mit dem Eingang des Verdampfers 11 durch einen Entspanner 14 verbunden, der durch einen Thermostaten 141 gesteuert wird, der die Temperatur in der Ausgangsleitung des Verdampfers 11 detektiert, um so den Verdampfer 11 geeignet zu versorgen.

Im Betrieb der Heizung ohne Zubereitung von heißem Sanitärwasser erfolgt der Durchfluss der Wärmeübertragungsflüssigkeit des Wärmeübertragungskreises 3 hauptsächlich durch den Heizkreis 32 und in verringertem Umfang durch den Kreis 33 für die Zubereitung von heißem Sanitärwasser entsprechend der Regulierung des Dreiwegeventils 34, das somit einfach die Aufrechterhaltung der Temperatur des Wärmetauschers 331 des Kreises für heißes Sanitärwasser sicherstellt.

Der Fluidkreis 10 der Wärmepumpe 1 versorgt zunächst den ersten Teil des Verflüssigers 13a, um die Puffermasse zu erwärmen, dann den zweiten Teil 13b, bevor das Fluid zu dem Verdampfer 11 zurückkehrt.

Im Betrieb der Zubereitung von heißem Sanitärwasser wirkt, wenn heißes Sanitärwasser abgezapft wird, die Steuerschaltung 4, der diesen Abgriff detektiert, auf das Dreiwegeventil 34 ein, um den Durchfluss des Heizkreises 32 zugunsten des Durchflusses in dem Kreis 33 für die Zubereitung von heißem Sanitärwasser zu reduzieren.

Die Kaltwasserleitung 5 kommt im Verflüssiger 13a an und greift hier Wärme ab, die der Puffermasse durch kontinuierlichen Eintrag durch die Wärmepumpe 1 zugeführt wird. Anschließend verläuft die Kaltwasserleitung 5 in den Wärmetauscher 351 des Kreises 33 für die Zubereitung von heißem Wasser, die zusätzlich zu der Wärme, die von dem Verflüssiger 13a und der Wärmepumpe 1 geliefert wird, durch den Kessel 2 versorgt wird.

Somit ermöglicht die Erfindung dem Hybridheizkreis, insgesamt regelmäßiger und wirksamer zu arbeiten, weil in der Heizperiode die Wärme im Hinblick auf die Zubereitung von heißem Sanitärwasser reservierend akkumuliert wird und in der Periode von heißem Sanitärwasser diese akkumulierte Wärme wiedergewonnen wird, um die Temperatur des eintretenden kalten Wassers bei der Zubereitung von heißem Sanitärwasser zu erhöhen.

Diese Funktionsweise hat außerdem den Vorteil, den Stillstand der Wärmepumpe während der Zubereitung von heißem Sanitärwasser zu vermeiden.

## Patentansprüche

1. Hybridheizungsanlage, die aus einer Luft/Flüssigkeit-Wärmepumpe und aus einem Kessel für die Heizung und die Zubereitung von heißem Sanitärwasser gebildet ist, die Folgendes umfasst:
- einen Wärmeübertragungsfluidkreis (3), der durch den Verflüssiger der Wärmepumpe (1) stromaufseitig des Kessels (2) verläuft und sich in einen Heizkreis (32) und einen Kreis (33) für die Zubereitung von heißem Sanitärwasser aufteilt, die durch ein Dreiwegeventil (34) mit dem Zweig (31) stromaufseitig des Verflüssigers verbunden sind,
- wobei der Kreis (33) für die Zubereitung von heißem Sanitärwasser einen Wärmetauscher (331) enthält, durch den die Sanitärwasserleitung verläuft, wobei die Anlage **dadurch gekennzeichnet ist, dass**
die eintretende Sanitärwasserleitung (5) durch den Verflüssiger (13a) verläuft, bevor sie durch den Wärmetauscher (331) des Kreises (33) für die Zubereitung von heißem Sanitärwasser verläuft.

2. Hybridheizungsanlage nach Anspruch 1, **dadurch gekennzeichnet, dass** der Verflüssiger in zwei Teile (13a, 13b) unterteilt ist, einen stromaufseitigen Teil (13a), durch den die Leitung (5) für kaltes Sanitärwasser verläuft, und einen stromabseitigen Teil (13b), durch den der Heizkreis (32) verläuft.

3. Hybridheizungsanlage nach Anspruch 2, **dadurch gekennzeichnet, dass** der stromaufseitige Teil des Verflüssigers (13a) mit einer Ladung aus wärmeleitendem Material versehen ist, um einen Puffer für die Speicherung von Wärmeenergie zu bilden.

4. Hybridheizungsanlage nach Anspruch 3, **dadurch gekennzeichnet, dass** das wärmeleitende Material Kupfer ist.

## Claims

1. Hybrid heating system which is formed from an air/liquid heat pump and from a boiler for heating and preparing hot sanitary water, which comprises the following:
- a heat transfer fluid circuit (3) which runs through the condenser of the heat pump (1) on the upstream side of the boiler (2) and is divided into a heating circuit (32) and a circuit (33) for preparing hot sanitary water, which circuits are connected to the branch (31) on the upstream side of the condenser by a three-way valve (34),
- wherein the circuit (33) for preparing hot sanitary water contains a heat exchanger (331) through which the sanitary water pipe runs,
wherein the system is **characterized in that** the entering sanitary water pipe (5) runs through the condenser (13a) before it runs through the heat exchanger (331) of the circuit (33) for preparing hot sanitary water.

2. Hybrid heating system according to Claim 1, **characterized in that** the condenser is divided into two parts (13a, 13b), a part (13a) which is on the upstream side and through which the pipe (5) for cold sanitary water runs, and a part (13b) which is on the downstream side and through which the heating circuit (32) runs.

3. Hybrid heating system according to Claim 2, **characterized in that** that part of the condenser (13a) which is on the upstream side is provided with a charge consisting of heat-conducting material in order to form a buffer for storing heat energy.

4. Hybrid heating system according to Claim 3, **characterized in that** the heat-conducting material is copper.

## Revendications

1. Système de chauffage hybride qui est formé d'une pompe à chaleur air/liquide et d'une chaudière pour le chauffage et la préparation d'eau chaude sanitaire, comprenant les éléments suivants :
- un circuit de fluide caloporteur (3) qui s'étend à travers le condenseur de la pompe à chaleur (1), en amont de la chaudière (2) et qui se divise en un circuit de chauffage (32) et en un circuit (33) pour la préparation d'eau chaude sanitaire qui sont reliés par l'intermédiaire d'une soupape à trois voies (34) avec la ramification (31) en amont du condenseur,
- le circuit (33) pour la préparation d'eau chaude sanitaire contenant un échangeur thermique (331) à travers lequel s'écoule le conduit d'eau sanitaire, le système étant **caractérisé en ce que**
le conduit (5) d'eau sanitaire entrant s'écoule à travers le condenseur (13a) avant de s'écouler à travers l'échangeur thermique (331) du circuit (33) pour la préparation d'eau chaude sanitaire.

2. Système de chauffage hybride selon la revendication 1, **caractérisé en ce que** le condenseur est divisé en deux parties (13a, 13b), une partie (13a) en amont, à travers laquelle s'écoule le conduit (5) d'eau froide sanitaire et une partie (13b) en aval, à travers laquelle s'écoule le circuit de chauffage (32).

3. Système de chauffage hybride selon la revendication 2, **caractérisé en ce que** la partie du condenseur (13a) située en amont est dotée d'une charge de matière thermoconductrice, pour former un tampon d'accumulation d'énergie calorifique.

4. Système de chauffage hybride selon la revendication 3, **caractérisé en ce que** la matière thermoconductrice est du cuivre.
